# EUROPÄISCHE PATENTSCHRIFT

(11) **EP 1 053 136 B1**
(45) Veröffentlichungstag und Bekanntmachung des Hinweises auf die Patenterteilung: **01.08.2001**
(21) Anmeldenummer: 99910222.1
(22) Anmeldetag: 12.02.1999
(51) Int. Cl.: B60R 21/20

(54) **LENKRAD MIT AIRBAGFÜHRUNG**
STEERING WHEEL WITH AIRBAG GUIDE
VOLANT AVEC DISPOSITIF DE GUIDAGE D'AIR BAG

(30) Priorität: 13.02.1998 DE 29802471 U
(43) Veröffentlichungstag der Anmeldung: 22.11.2000
(73) Patentinhaber: TRW Automotive Safety Systems GmbH & Co. KG, 63743 Aschaffenburg (DE)
(72) Erfinder: DERRICK, John, D-97265 Hettstadt (DE)
(74) Vertreter: Degwert, Hartmut, Dipl.-Phys.
(86) Internationale Anmeldenummer: EP9900926
(87) Internationale Veröffentlichungsnummer: WO9941112

(56) Entgegenhaltungen:
- WO-A-98/15431
- DE-A- 19 625 722
- US-A- 5 480 184

## Beschreibung

Die Erfindung betrifft ein Lenkrad mit einem aus Nabe, Speichen und Lenkradkranz bestehenden, topfartig ausgebildeten Lenkradskelett sowie mit einem darin untergebrachten Airbagmodul, das zur Betätigung der Hupe gegen eine Rückstellkraft um den erforderlichen Kontaktweg parallel zur Lenkradachse verschieblich angeordnet ist.

Bei derartigen Lenkrädern, wie sie beispielsweise aus der DE-A-196 25 722 bekannt sind, können die Airbagmodule auf sehr unterschiedliche Weise mit dem Lenkrad verbunden sein. Soll das Lenkrad, wie weitgehend üblich, auf die Lenksäule aufgesteckt und mittels einer zentralen Mutter befestigt werden, können die Airbagmodule erst nach dem Einbau des Lenkrades montiert werden, was im Hinblick auf die dafür erforderliche Endmontagezeit vielfach als nachteilig angesehen wird. Hinzu kommt, daß dabei die Airbagmodule zwar von der Oberseite der Lenkräder her eingesetzt werden, daß sie aber von der Rückseite des Lenkrades her befestigt werden müssen, weil Befestigungselemente aus optischen Gründen auf der Oberseite des Lenkrades nicht erwünscht sind.

Für die neuerdings im Hinblick auf möglichst kurze Endmontagezeiten angestrebte Lenkradbefestigung, bei der Lenkrad und Airbagmodul eine Montageeinheit bilden, müssen ein oder mehrere Befestigungselemente zur Verbindung des Lenkrades mit der Lenksäule auf der Rückseite des Lenkrades vorgesehen werden, was zwar konstruktiv möglich ist, bei der Montage aber mit mehr oder weniger großen Schwierigkeiten verbunden ist, weil der zur Verfügung stehende Raum zur Betätigung der Befestigungselemente hinter dem Lenkrad meist nur sehr begrenzt ist. Zusätzliche Probleme ergeben sich, wenn das Airbagmodul zur Betätigung der Hupe gegen eine Rückstellkraft um den erforderlichen Kontaktweg parallel zur Lenkradachse verschieblich angeordnet werden muß.

Auch für derartige Airbagbefestigungen sind bereits verschiedene Lösungen bekannt geworden. Unabhängig von der Art der Lenkradbefestigung tritt dabei jedoch in allen Fällen das Problem auf, daß das Airbagmodul in einer Ebene senkrecht zur Betätigungsrichtung nur mittels sehr aufwendiger Konstruktionen so geführt werden kann, daß eine betriebssichere Kontaktgebung für die Hupe gewährleistet werden kann und daß der zwischen der Abdeckung des Airbagmoduls und der Lenkradumgebung erforderliche Bewegungsspalt nicht ungleichmäßig und damit optisch störend ist.

Es besteht somit die Aufgabe für in Lenkrädern angeordnete Airbagmodule, die zur Betätigung der Hupkontakte in Richtung der Lenkradachse beweglich sein müssen, eine Möglichkeit aufzuzeigen, die es erlaubt, mit möglichst einfachen Mitteln das Airbagmodul hinsichtlich aller Richtungen senkrecht zur Hupbetätigungsrichtung, d.h. in einer X-Y-Ebene sicher zu führen, ohne daß die Bewegungsmöglichkeit in der zu dieser Ebene senkrechten Richtung (Z-Richtung) beeinträchtigt wird.

Zur Lösung dieser Aufgabe wird bei einem Lenkrad der eingangs genannten Art erfindungsgemäß vorgeschlagen, daß in dem topfartig ausgebildeten Lenkradskelett in Umfangsrichtung verteilt wenigstens drei Führungsstellen vorgesehen sind und daß an einem Generatorträger des Airbagmoduls ein im Querschnitt U-förmiges, nach unten offenes, topfartiges Führungsblech ausgebildet oder befestigt ist.

Das am Generatorträger ausgebildete oder befestigte, topfartige Führungsblech kann so stabil ausgeführt werden, daß unter allen normalerweise in der X-Y-Ebene auftretenden Kräften keinerlei elastische Verformung stattfinden kann, so daß die Zuordnung der Hupkontakte gewährleistet ist und an der Oberfläche des Lenkrades keine optisch störenden Verschiebungen der Airbagabdeckung relativ zur Lenkradumgebung stattfinden können. Dem topfartigen Führungsblech müssen im Lenkradskelett wenigstens drei in Umfangsrichtung verteilte Führungsstellen gegenüberstehen, damit Relativbewegungen zwischen Airbagmodul und Lenkrad in der X-Y-Ebene vermieden werden können. Selbstverständlich können aber auch mehr als drei Führungsstellen oder gar eine allseitig umlaufende Führung vorgesehen werden.

Dementsprechend können die Führungsstellen aus im Lenkradskelett befestigten Kunststoffelementen bestehen oder von einem in Umfangsrichtung durchgehenden Kunststoffring gebildet werden. Auf der anderen Seite ist es möglich, im topfartigen Führungsblech über den Umfang der Seitenwandung verteilt mehrere Ausnehmungen vorzusehen, wenn dies zur Gewichtseinsparung gewünscht wird. Die Kunststoffelemente bzw. der Kunststoffring sind am Lenkradskelett zweckmäßigerweise mittels Haltestiften befestigt.

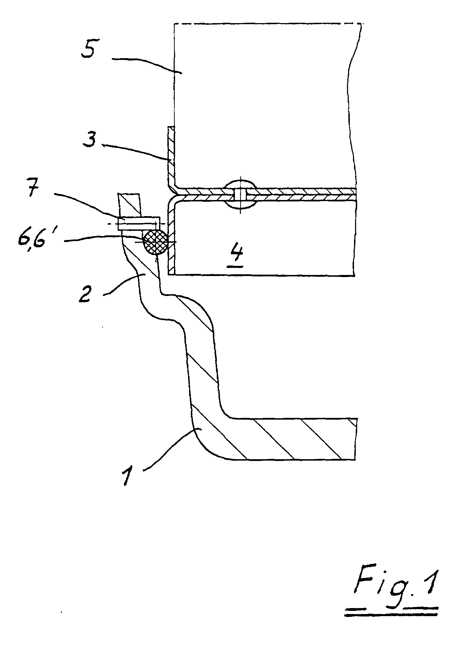

Weitere Einzelheiten werden anhand des in Fig. 1 dargestellten Ausführungsbeispiels näher erläutert.

Fig. 1 zeigt einen vertikalen Teilschnitt durch ein Lenkradskelett 1 und ein Airbagmodul 5, das in einem Generatorträger 3 angeordnet ist, an dem ein im Querschnitt U-förmiges, nach unten offenes, topfartiges Führungsblech 4 angenietet ist. Am Lenkradskelett 1 sind in Umfangsrichtung verteilt wenigstens 3 Führungsstellen 2 vorgesehen, die der zylindrischen Wandung des topfartigen Führungsblechs gegenüberliegen. Zwischen der Führungsstelle 2 und dem Führungsblech 4 ist im Lenkradskelett 1 ein Kunststoffelement 6 angeordnet und mittels des Stiftes 7 befestigt. Zweckmäßigerweise wird ein Kunststoff mit guten Reibungseigenschaften verwendet, damit für die bei der Hupbetätigung auftretende Relativbewegung zwischen dem Führungsblech 4 und dem Kunststoffelement 6 keine zusätzlichen Schmiermittel erforderlich sind.

Statt einzelner, in Umfangsrichtung verteilt angeordneter Führungsstellen und Kunststoffelementen kann die Führungsstelle und/oder das Kunststoffelement in Umfangsrichtung durchgehend ausgebildet werden, d.h. daß das Kunststoffelement aus einem Kunststoffring 6' bestehen kann.

Für die Vorspannung des Airbagmoduls entgegen der Hupbetätigungsrichtung kann auf bekannte und bewährte Konstruktionselemente, wie Schrauben- oder Blattfedern zurückgegriffen werden, ohne daß vom Grundprinzip des Erfindungsgedankens abgegangen werden muß. Die vorgeschlagene Führung für das Airbagmodul ist in der Herstellung sehr einfach, leicht zu montieren und kann sehr platz- und gewichtsparend ausgebildet werden.

## Patentansprüche

1. Lenkrad mit einem aus Nabe, Speichen und Lenkradkranz bestehenden, topfartig ausgebildeten Lenkradskelett (1) sowie mit einem darin untergebrachten Airbagmodul (5), das zur Betätigung der Hupe gegen eine Rückstellkraft um den erforderlichen Kontaktweg parallel zur Lenkradachse verschieblich angeordnet ist, dadurch gekennzeichnet, daß in dem Lenkradskelett (1) in Umfangsrichtung verteilt wenigstens drei Führungsstellen (2) vorgesehen sind und daß an einem Generatorträger (3) des Airbagmoduls (5) ein im Querschnitt U-förmiges, nach unten offenes, topfartiges Führungsblech (4) ausgebildet oder befestigt ist.

2. Lenkrad nach Anspruch 1, dadurch gekennzeichnet, daß die Führungsstellen (2) aus im Lenkradskelett (1) befestigten Kunststoffelementen (6) bestehen.

3. Lenkrad nach Anspruch 1, dadurch gekennzeichnet, daß die Führungsstellen (2) von einem in Umfangsrichtung durchgehenden, im Lenkradskelett (1) befestigten Kunststoffring (6') gebildet werden.

4. Lenkrad nach Anspruch 3, dadurch gekennzeichnet, daß am topfartigen Führungsblech (4) über den Umfang der Seitenwandung verteilt mehrere Ausnehmungen vorgesehen sind.

5. Lenkrad nach einem der Ansprüche 1 bis 4, dadurch gekennzeichnet, daß die Kunststoffelemente (6) bzw. der Kunststoffring (6') mittels Haltestiften (7) am Lenkradskelett (1) festgelegt sind bzw. ist.

## Claims

1. A steering wheel comprising a pot-shaped steering wheel skeleton (1) consisting of hub, spokes and steering wheel rim and an airbag module (5) housed therein, which for actuation of the horn is displaceably arranged against a return force across the required contact path parallel to the steering wheel axis, characterized in that at least three guiding points (2) are provided in a manner distributed in the circumferential direction in the steering wheel skeleton (1) and that a pot-shaped guiding metal sheet (4) which is U-shaped in cross-section and open to the bottom is embodied on or attached to a generator support (3) of the airbag module (5).

2. The steering wheel according to claim 1, characterized in that the guiding points (2) consist of plastic elements (6) attached in the steering wheel skeleton (1).

3. The steering wheel according to claim 1, characterized in that the guiding points (2) are formed by a plastic ring (6') continuous in the circumferential direction and attached in the steering wheel skeleton (1).

4. The steering wheel according to claim 3, characterized in that a plurality of recesses is provided in a manner distributed across the circumference of the side wall at the pot-shaped guiding metal sheet (4).

5. The steering wheel according to any one of claims 1 to 4, characterized in that the plastic elements (6) and the plastic ring (6'), respectively, are/is attached to the steering wheel skeleton (1) by means of retaining pins (7).

## Revendications

1. Volant comportant une armature de volant (1) réalisée en forme de pot, constituée par un moyeu, des rayons et une couronne de volant, ainsi qu'un module de coussin à gaz (5) logé dans ladite armature et qui, pour actionner le klaxon, est agencé en déplacement parallèle à l'axe du volant, sur le trajet de contact nécessaire, à l'encontre d'une force de rappel, caractérisé en ce qu'il est prévu au moins trois emplacements de guidage (2) répartis en direction périphérique dans l'armature de volant (1) et en ce que sur un support de générateur (3) du module de coussin à gaz (5) est réalisée ou fixée une tôle de guidage (4) en forme de pot, à section en forme de U et ouverte vers le bas.

2. Volant selon la revendication 1, caractérisé en ce que les emplacements de guidage (2) sont constitués par des éléments de matière plastique (6) fixés dans l'armature de volant (1).

3. Volant selon la revendication 1, caractérisé en ce que les emplacements de guidage (2) sont formés par une bague de matière plastique (6') continue en direction périphérique, fixée sur l'armature de volant (1).

4. Volant selon la revendication 3, caractérisé en ce que sur la tôle de guidage (4) en forme de pot sont prévus plusieurs évidements répartis sur la périphérie de la paroi latérale.

5. Volant selon l'une quelconque des revendications 1 à 4, caractérisé en ce que les éléments de matière plastique (6) et/ou la bague de matière plastique (6'), sont fixés et/ou est fixée sur l'armature de volant (1) au moyen de goupilles de fixation (7).
